# EUROPEAN PATENT APPLICATION

(11) **EP 3 160 149 A2**
(43) Date of publication of application: **26.04.2017**
(21) Application number: 16196492.9
(22) Date of filing: 30.04.2015
(51) Int. Cl.: H04N 21/2665, H04N 21/4227, H04N 21/4402, H04N 21/462, H04N 21/63

(54) **A SYSTEM AND A METHOD FOR DISTRIBUTED PROCESSING AND SELECTION OF VIDEO CONTENT IN A MOBILE CONTENT GATEWAY**

(62) Divisional of application: 15165833.3
(71) Applicant: Advanced Digital Broadcast S.A., 1292 Chambesy (CH)
(72) Inventor: Sergiel, Przemyslaw, 65-119 Zielona Gora (PL); Skowronski, Zbigniew, 65-119 Zielona Gora (PL)
(74) Representative: Kancelaria Eupatent.pl Sp. z.o.o

(57) **Abstract**

A method for distributing video content to at least one mobile device (411-413) at a customer premise (140) system comprising a plurality of stationary devices (421-423) capable of receiving the video content from at least one content provider (160), the method being characterized in that it comprises the steps of: generating, at the mobile content gateway (414), at least one database (731) of channels recently watched on the mobile devices (411-413) comprising entries related to at least one of a particular: Date (D_{Start}), day of the week (DoW), start time (T_{Start}) and end time (T_{End}); generating, at the mobile content gateway (414) a list (721) of most popular channels by selecting entries of at least one database (731) of channels recently watched on the mobile devices (411-413); sending, from a mobile content gateway (414), to the at least one stationary device (421-423), requests to tune to a channel selected from the list (721) of most popular channels; receiving, at the stationary devices (421-423), requests to tune a tuner (512) of the stationary device (421-423) to a requested channel received from the content provider (160); preparing, at the stationary devices (421-423), at least one single-program stream from the content received by the tuner (512) of that device and sending the single-program stream to the mobile content gateway (414); outputting, from the mobile content gateway (414), the at least one single-program stream as at least one adaptive stream; and providing the at least one adaptive stream to the at least one mobile device (411-413) over a wireless data transmission interface.

## Description

### TECHNICAL FIELD

The present invention is related to distributed processing of video data within a B2B video services system.

### BACKGROUND

Market trends in television, B2B video service sector show more and more interest in allowing offering video services to mobile devices. For example, a hotel operator (or any other facility for end users, such as a healthcare facility) may wish to offer users a service of watching video content not only on stationary TV sets of the hotel, but on the users' own mobile devices (such as laptops, tablets or smartphones) as well.

Up to now, video was mostly delivered to customers' premises from a video provider via a regular RF infrastructure (Cable, Terrestrial, Satellite) and a stationary devices (such as set top boxes (STB) or set back boxes (SBB)) at the customer premise were used to decrypt, decode and deliver content directly (for example via a HDMI cable) to TV sets for watching by the end users.

Video delivery of B2B services to mobile devices requires a use of another technology: IP-based and supporting adaptive streaming. To do that in the existing systems, as described before, upgrade of existing operator's network would be needed, for example by installing sophisticated headends to transmit the video content. The B2B sector is smaller than the residential sector, therefore a significant investment to upgrade technology can be problematic to implement.

Delivering video services to mobile devices exhibits challenges related to upgrading the current delivery networks to offer IP unicast transmission and adding capability to broadcast adaptive type streaming (such as HLS, Dash or MS Smooth Streaming), which helps to run smooth services without interruption in open internet networks, where there is not much control regarding network throughput and capacity.

Delivering video content as a unicast transmission generates a lot of network traffic. Every end-user receives a dedicated stream of data (separate streams are transmitted even to end users watching the same video). Running a unicast transmission on existing networks may overload or result in unacceptably low network bandwidth per user.

In order to prepare the network for unicast transmission for mobile devices, significant upgrade is often necessary, which can be expensive and time-consuming. Apart of upgrading the network to unicast transmission, investment on operator's site is needed to build a content delivery network (CDN) capable to serve adaptive streaming. That also requires a significant cost and time investment.

There is therefore a need to provide a way to offer B2B video services to mobile devices which would not require substantial investment in new system elements and would utilize the resources of the existing systems.

### SUMMARY

There is disclosed a method for distributing video content and a system for distributing video channels to at least one mobile device at a customer premise system comprising a plurality of stationary devices capable of receiving the video channels from at least one content provider, according to the appended claims.

### BRIEF DESCRIPTION OF FIGURES

The invention is shown by means of example embodiments on a drawing, in which:
Fig. 1A shows an example of an embodiment of a system according to the invention;
Fig. 1B shows logical channels in communication channels;
Fig. 2 shows a functional schematic diagram of a manager module;
Fig. 3 shows a functional schematic diagram of a content provider system;
Fig. 4A shows an architecture of a customer premises system;
Fig. 4B shows logical channels in physical data interfaces used in a customer premises system;
Fig. 5A shows a simplified architecture of a stationary device;
Fig. 5B shows a simplified functional structure of a data receiving block;
Fig. 6 shows a functional schematic diagram of a video processing unit;
Fig. 7 shows a functional schematic diagram of a mobile content gateway unit;
Fig. 8 shows a simplified architecture of a mobile device;
Fig. 9 shows a schematic diagram of one of processes operable at the stationary device, indicating the operation of the device when content is watched at a selected channel;
Figs. 10A and 10B shows a schematic diagram of one of processes operable at the stationary device, indicating the operations of the device when it receives a request from the mobile content gateway manager to perform the operations of tuning to a selected channel, preparing an appropriate stream and sending the stream to the storage 740;
Figs. 11A and 11B show a schematic diagram of an executed by the player unit, which relates to generating a database of channels recently watched on the mobile devices;
Figs. 12A and 12B show a structure of the database of watched channels describing the channels recently viewed by the mobile devices;
Fig. 13 shows a schematic diagram of a process executed by the player unit, which relates to transmitting single-program streams prepared by the video processing unit;
Figs. 14A and 14B show a schematic diagram of a process operated by the channel analyzer for defining a list of most popular channels;
Figs. 15A and 15B show a schematic diagram of operation of a client application operable at the mobile device;
Figs. 16A and 16B show a schematic diagram of operation of a process executed by the MCG manager to provide dynamic assignment of channels in the stationary devices.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

In the present disclosure, the term "video content" is to be understood more broadly as multimedia content comprising video data and associated audio data and associated additional data (such as content description, etc.). The term "video content" is used to distinguish the content from other content types, such as still images or raw data (e.g. files).

### DETAILED DESCRIPTION

The system and method presented herein allows utilizing the existing infrastructure of the B2B sector to build local mobile content gateways (MCGs), which help to overcome challenge of network upgrade to IP unicast transmission and adaptive streaming. An example of such infrastructure can be a Commercial Video Solution offered by Advanced Digital Broadcast. Stationary devices (such as set-top boxes or set-back boxes), which are part of the existing customer premise infrastructure often have spare resources (i.e. broadcast tuners), which can be used as interfaces to receive content delivery in a traditional manner (such as QAM, Satellite, Terrestrial, IP multicast).

Each set-top box can be tuned to pre-assigned channels. Data received by particular set-top boxes can be delivered to a gateway control and processing unit (as described below), which generates adaptive streaming and applies local content security to protect the content.

The number of stationary devices, deployed in an average customer premise facility, is typically about 100 units, which allows building a farm of ingestion units to provide an efficient B2B video service offer to about 100 mobile devices or more, in case when there are more than 1 free tuner available at each stationary device.

The control of pre-assignment is possible through a control unit (as described below in details). The control unit can be accessed remotely or locally. Data received by particular stationary devices is delivered (for example as an IP stream of single-program stream data) to a gateway control and processing unit, which processes it to adaptive streaming (for example transcodes to various bit rates, packages into small chunks and generates an applicable manifest metadata file as it is needed by the adaptive streaming).

A mobile content gateway unit (as described in details below) can apply local content security to protect the delivered content. Content prepared in this way is transmitted over a wireless network (such as Wi-Fi) to mobile devices within the customer premise facility (such as a hotel). The processed content is ready for use by the end user mobile devices in a given B2B location (also called a customer premise).

Information about a list of available video assets (local channels) can be delivered to mobile devices via a client application (as described in details below) in a seamless manner. Management of content list and delivery method can be controlled by the existing manager module (as described in details below).

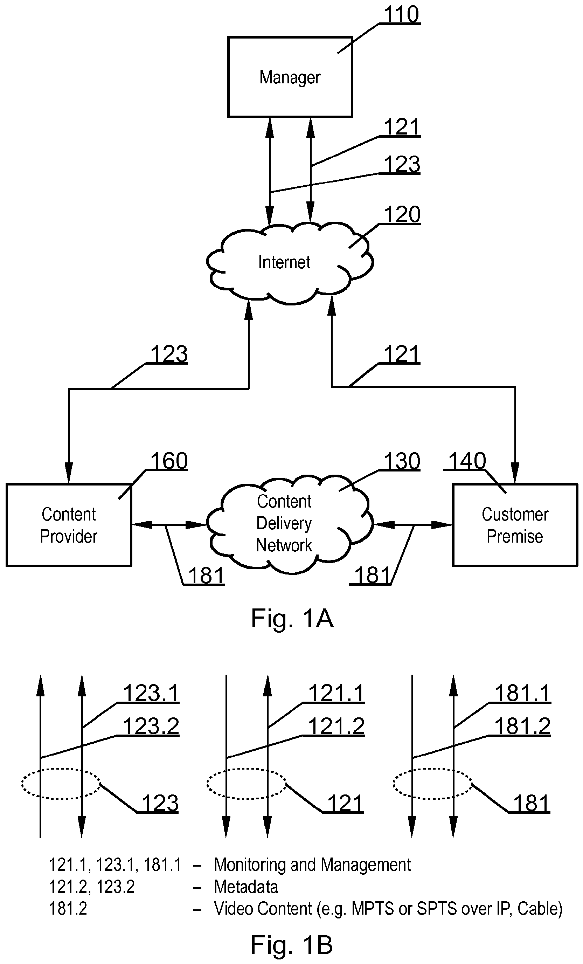

Fig. 1A shows an example of an embodiment of a system according to the invention. The system is designed to provide content from a content provider 160 to a customer premise 140 system over a content delivery network 130 (for example a QAM, Satellite, Terrestrial or IP multicast network) via a communication channel 181.

A manager module 110 is configured to monitor the devices at the customer premise 140 and in particular to receive content requests from the devices, receive content metadata from content provider 160 and transmit the content metadata to the user devices (mobile or stationary) at the customer premise 140. The manager 110 communicates with the devices at the customer premise 140 via communication channel 121 and with the content provider 160 via communication channel 123 wherein the communication channels 121, 123 are preferably implemented over an open network, such as Internet.

Fig. 1B shows logical channels in the communication channels 121, 123, 181. For example, the communication channel 121 may comprise the following logical channels: a bidirectional channel 121.1 for transmission of monitoring and management data and a downstream channel 121.2 for transmission of metadata from the manager module 110 to the customer premise.

The communication channel 123 may comprise a bidirectional channel 123.1 for transmission of monitoring and management data and an upstream channel 123.2 for transmission of metadata from the content provider to the manager module 110.

The communication channel 181 may comprise a bidirectional channel 181.1 for transmission of monitoring and management data and a downstream channel 181.2 for transmission of video data from the content provider to the customer premise.

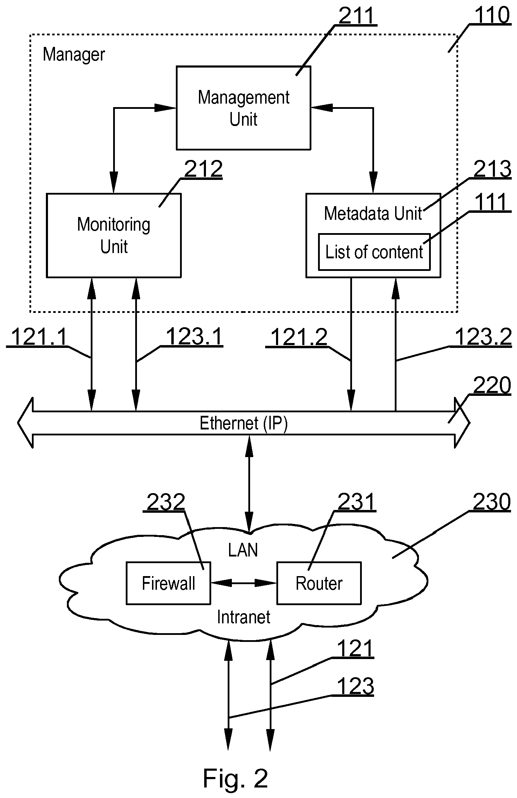

Fig. 2 shows a functional schematic diagram of the manager module 110. A monitoring unit 212 is configured to receive and transmit monitoring and management data over logical channels 121.1 and 123.1. A metadata unit 213 is configured to receive and transmit metadata, such as the list 111 of content available in the system, over logical channels 121.2 and 123.2. A management unit 211 is configured to communicate with the monitoring unit 212 and the metadata unit 213, process the received data and generate data to be transmitted. The manager module 110 is connected to an Ethernet (IP) network 220, via which it is connected to an Intranet 230, wherein a firewall 232 and a router 231 operate to secure and coordinate data transmission.

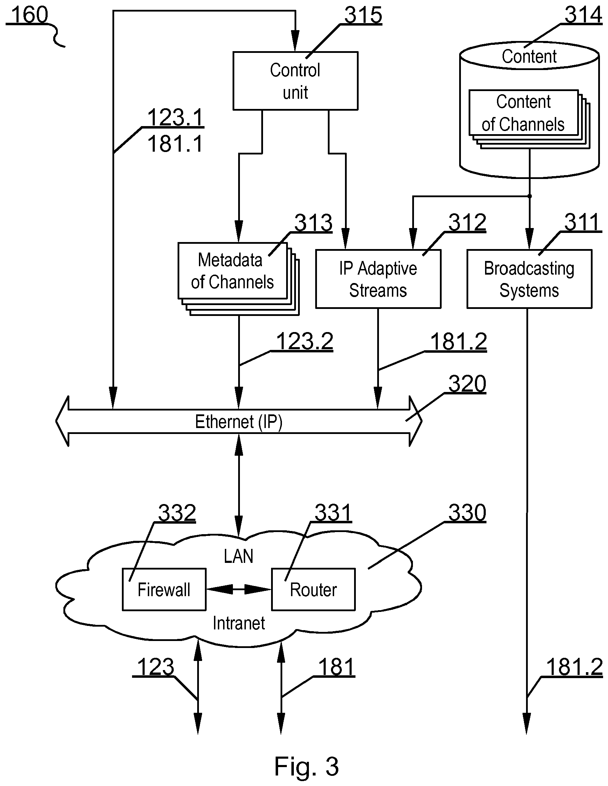

Fig. 3 shows a functional schematic diagram of the content provider 160 system, which operates in a manner known in the art. Therefore, there are not required any modifications, to content provider's systems, in order to implement the system and method presented herein.

The content provider 160 system comprises a control unit 315 configured to deliver to the manager module 110, in response to requests received via communication channel 123.1, the requested metadata related to channels from a metadata database 313, such as a list of content (list of channels 111), additional information (such as electronic program guide (EPG) data), etc. Moreover, the control unit 315 is configured to provide to the devices at the customer premises 140 system, in response to requests received via communication channel 181.1, the requested content and/or video streams (via communication channels 181, 181.2).

The content is provided from a content source 314, such as a local storage or a connection with other content providers, as IP adaptive streams managed by unit 312 or as broadcast streams via broadcasting systems 311. Content delivered by the Ethernet (IP) network 320 is transmitted via the Intranet 330, wherein a firewall 332 and a router 331 operate to secure and coordinate data transmission.

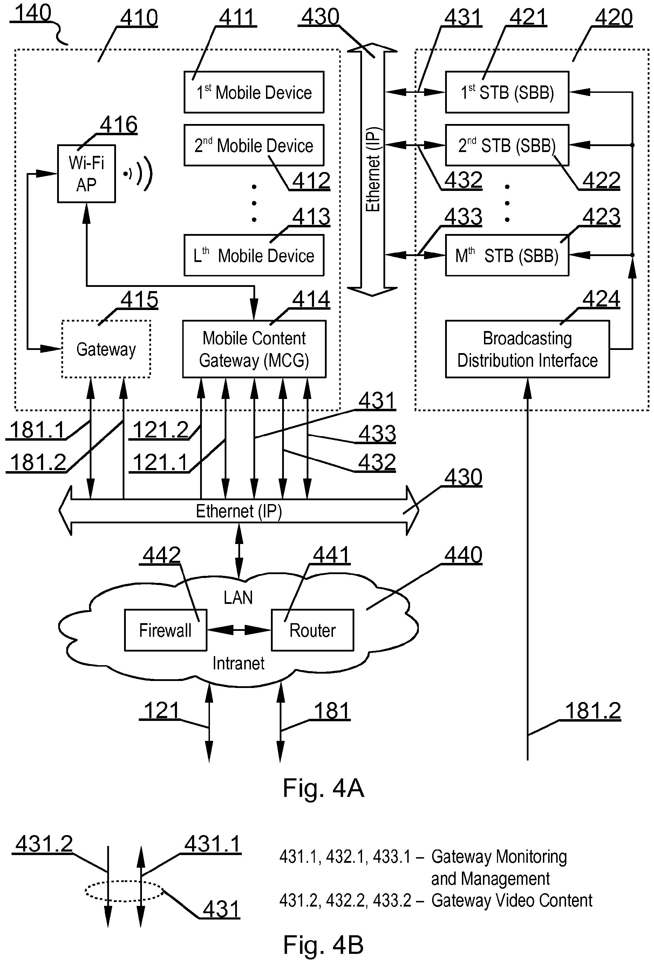

Fig. 4A shows an architecture of a customer premises 140 system, comprising a set 410 of mobile devices 411-413 (such as users' own tablets, laptops or smartphones configured to communicate wirelessly) and a set 420 of stationary devices 421-423 (such as devices of the premises operator, such as television set-top boxes or set-back boxes configured to communicate via a terrestrial or cable television network).

The stationary devices 420 in the present system serve not only to deliver content to the user (as they typically do, for example to prepare content for display on the television screen to which they are directly connected), but also to generate content to be converted to single-program streams (such as SPTS (Single Program Transport Stream) of MPEG-type system (MPEG- Moving Picture Experts Group)) in the mobile content gateway (MCG) unit 414.

The mobile content gateway 414 unit therefore uses the local resources in form of stationary devices 420 and prepares adaptive streams to be transmitted to the mobile devices 410 via a wireless transmission unit 416, such as a Wi-Fi access point. Communication is effected via the Ethernet (IP) network 430, via which the devices may connect with content provider systems via Intranet 440, wherein a firewall 442 and a router 441 operate to secure and coordinate data transmission.

An alternative embodiment is possible, without the mobile content gateway 414, wherein the transmission of video streams to mobile devices 411-413 from the content provider 160 is effected via a gateway unit 415.

Fig. 4B shows logical channels in the physical data interfaces 431, 432, 433 used in the customer premises 140 system, such as a bidirectional logical channel 431.1 (similarly, 432.1, 433.1) for transmission of monitoring and management gateway data and 431.2 (similarly, 432.2, 433.2), and an downstream channel 431.2 for transmission of video content (for example in form of SPTS streams).

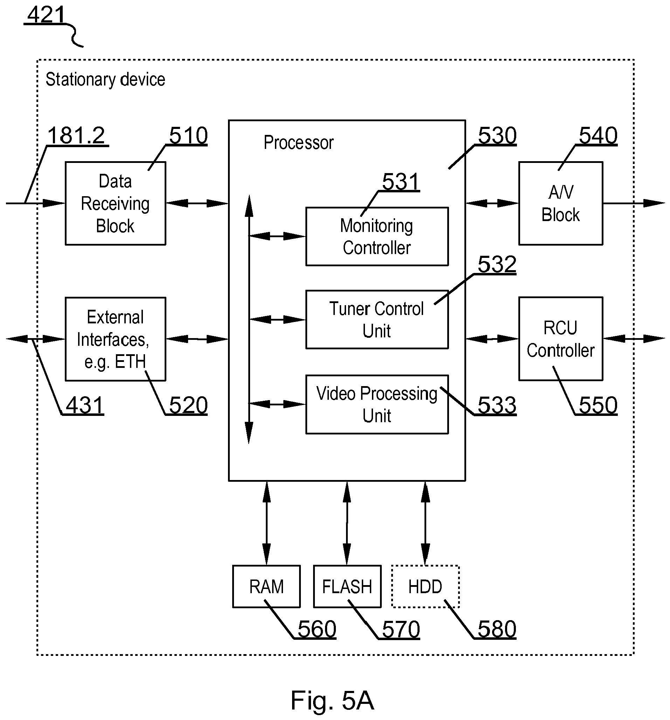

Fig. 5A shows a simplified architecture of a stationary device, such as a television set-top box (STB) or a television set-back box (SBB), wherein mainly the elements essential for operation of the system of the invention are shown.

A data receiving block 510 is configured to receive downstream data, such as video content, from the broadcasting distribution interface 424 via channel 181.2. External interfaces 520, such as the Ethernet interface, are used to communicate via channel 431.

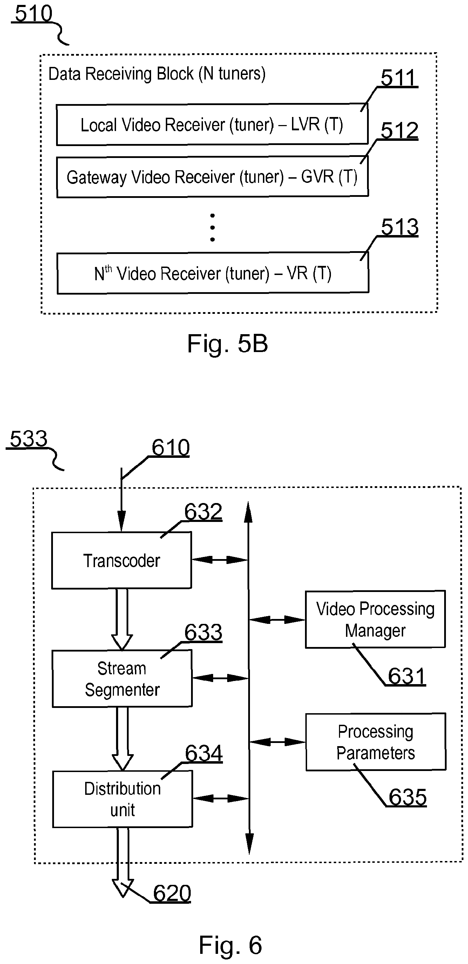

A processor 530 comprises a tuner control unit 532 configured to control tuners 511-513 (discussed in details with reference to Fig. 5B) and a monitoring controller 531 configured to monitor the other device blocks, such as an audio/video block 540 or the external interfaces 520. The device is operable by the user via a remote control unit (RCU) controller 550.

A video processing unit (VPU) 533 is configured to prepare single-program streams (such as MPEG-type SPTSs) having particular technical parameters (such as a particular bitrate, resolution, index file (manifest) or a playlist, depending on transmission method (such as HLS, Dash or MS Smooth Streaming)) and to send the streams to the storage 740 at the mobile content gateway 414.

The processor operates utilizing RAM 560 and Flash 570 memory blocks. A hard disk drive 580 or another type of mass storage can be used to store video or other data locally at the device, but is not essential for its operation.

Fig. 5B shows a simplified functional structure of the data receiving block 510 (also called a front-end block). It comprises a plurality (N) of tuners (such as satellite, cable, terrestrial or IPTV tuners), wherein one of the tuners 511 is a local video receiver (LVR) used for the local purposes of the device (for example to receive content to be displayed at the television screen to which the device is directly connected) and another tuner 512 is a gateway video receiver (GVR) used for the purposes of the mobile content gateway 414 (for example to receive content to be displayed at a mobile device).

The data receiving block may further comprise other (N-2) tuners which may be used for other needs of the stationary device.

Fig. 6 shows a functional schematic diagram of the video processing unit 533 of the stationary device.

The video processing unit 533 comprises a transcoder 632 configured to receive, in real time, a video stream 610 from the data receiving block 510 and to transcode it to a transport stream in a format handled by the mobile device (the client device), preferably without changing the output parameters of the stream, such as video dimensions or codec type. The transcoder 632 can be a hardware unit within the processor 530 or can be realized as a software module operable by the processor 530.

A stream segmenter 633 is configured to read the transport stream from the transcoder 632 and divide it into a series of smaller multimedia files (segments), preferably having equal length, as well as to create an index file comprising references to the segments.

Each time when the stream segmenter 633 creates new segments, the index file is updated. The index file is used to determine the availability and location of the segments. Moreover, the stream segmenter 633 may be configured to cipher each segment and create a key file for ciphering. The stream segmenter 633 can be realized as a software module operable by the processor 530.

The transcoder 632 and the segmenter 633 process the video streams according to processing parameters defined in memory block 635, wherein the processing parameters include format supported by the client device, bitrates and resolution.

A distribution module 634 is configured to transmit 620 the segments and the index file to the storage 740 of the mobile content gateway.

A video processing manager 631 is configured to coordinate the operation of the other elements of the video processing unit 533.

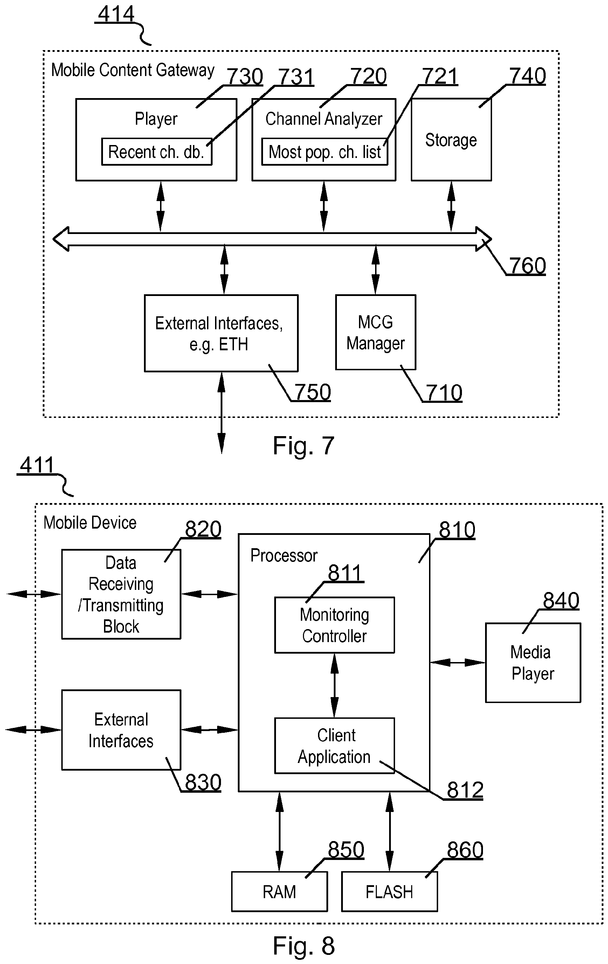

Fig. 7 shows a functional schematic diagram of the mobile content gateway (MCG) unit 414. It comprises a mobile content gateway (MCG) manager 710 configured to control the system at the client side and the other blocks of the MCG unit 414.

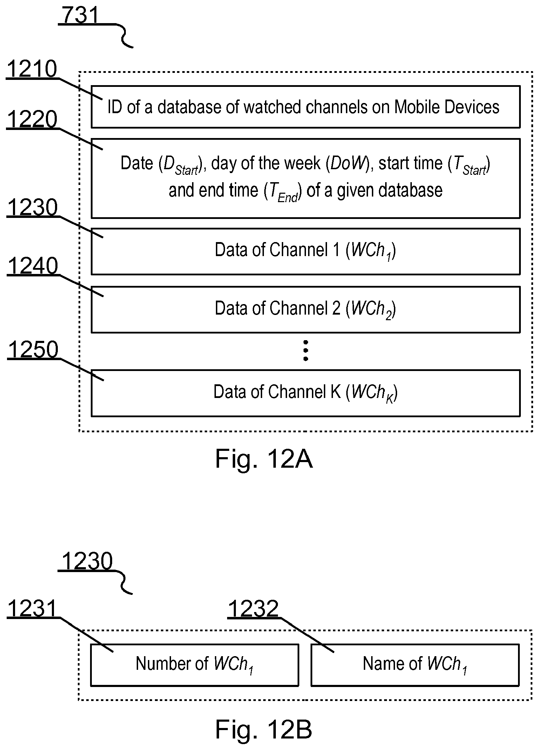

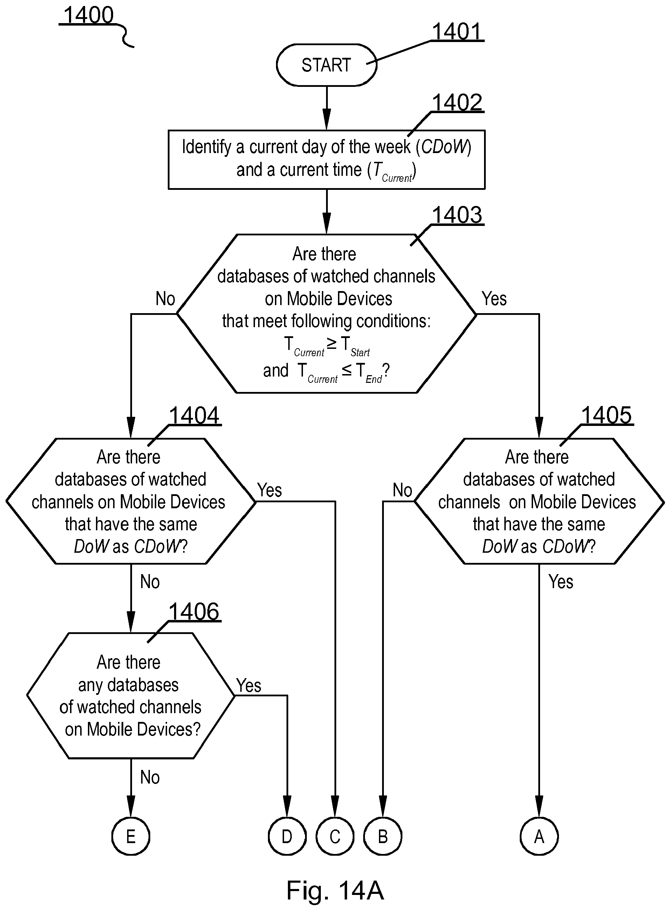

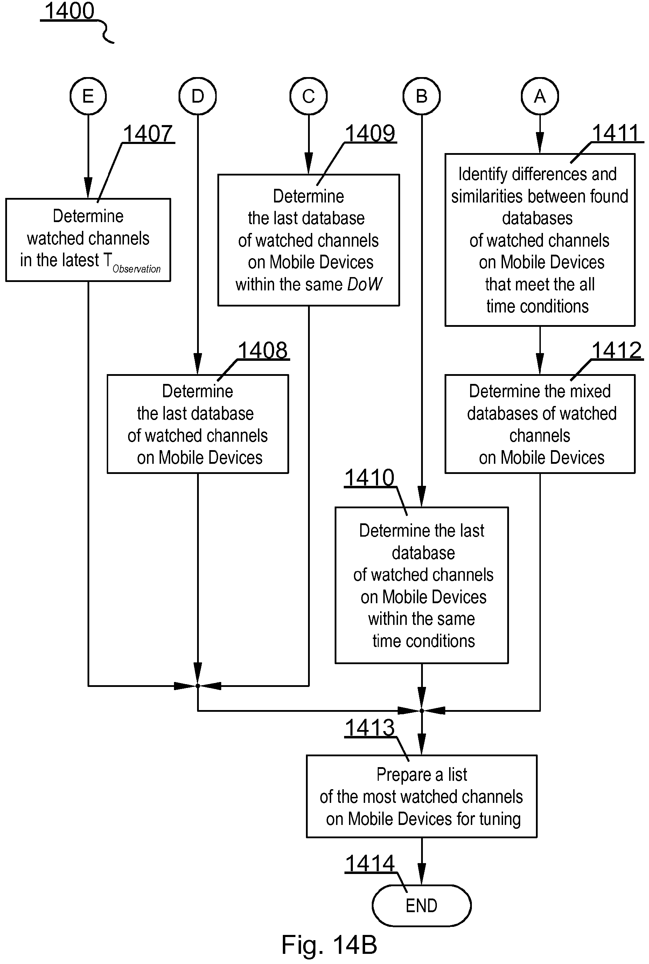

A player unit 730 is configured to transmit the streams prepared by the VPU 533 to particular mobile devices 411-413 in response to a request from the MCG manager 710. Moreover, the player unit 730 is configured to create a database 731 (or a plurality of databases) of channels recently watched on the mobile devices (see Figs. 12A and 12B), which is (are) used to prepare, by the channel analyzer module 720, a list 721 of most popular channels (1413) for particular time windows (see Figs. 14A and 14B).

A mass storage 740 is used to store the video streams transmitted from the devices 421-423 to the MCG 414, single-program streams to be transmitted to the mobile devices 411-413 and as a cache memory for storing temporary results of operations realized by the other units of the MCG unit 414.

A channel analyzer module 720 is responsible for analysis of the database 731 of channels recently watched on the mobile devices and for preparing the list 721 of most popular channels (see Fig. 14B, step 1413). The list 721 is used by the MCG manager 710 to configure a stationary device to tune to a particular channel, prepare the adaptive streams according to required technical parameters and to transmit the video stream to the storage 740.

External interfaces 750 are used for communicating with other elements of the customer premise 140 system. All blocks may communicate via an internal communication bus 760.

Fig. 8 shows a simplified architecture of a mobile device 411 (such as a user's tablet, laptop or smartphone) wherein mainly the elements essential for operation of the system of the invention are shown. A data receiving/transmitting block 820 is configured to receive the video data (for example in form of a single-program stream) dedicated for the particular mobile device 411 via a wireless transmission channel from the wireless transmission device 416.

External interfaces 830, such as the Ethernet interface, are used to communicate via other communication channels. A processor 810 operates a client application 812 and a monitoring controller configured to monitor the other mobile device blocks, such as a media player 840 or the external interfaces 830.

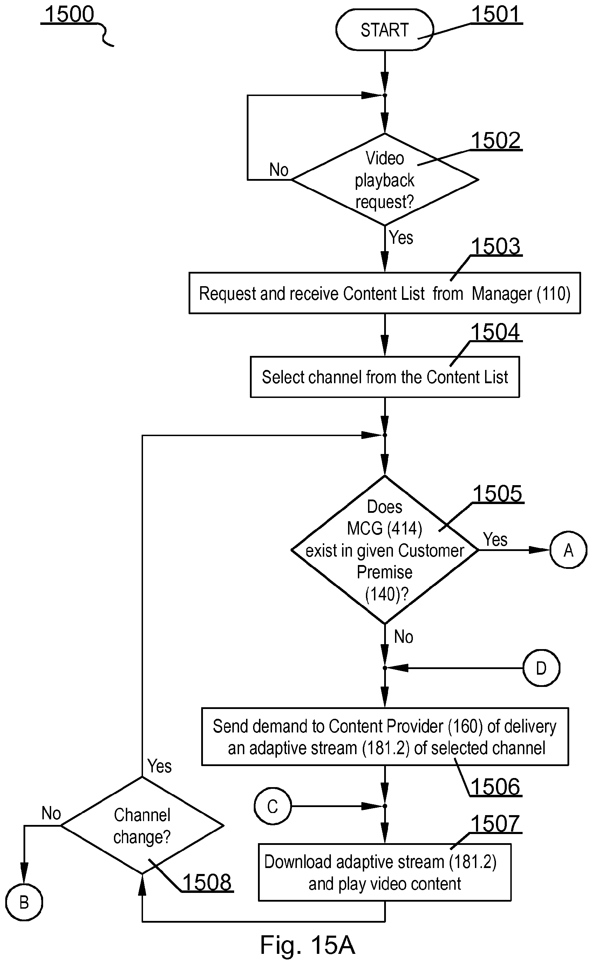

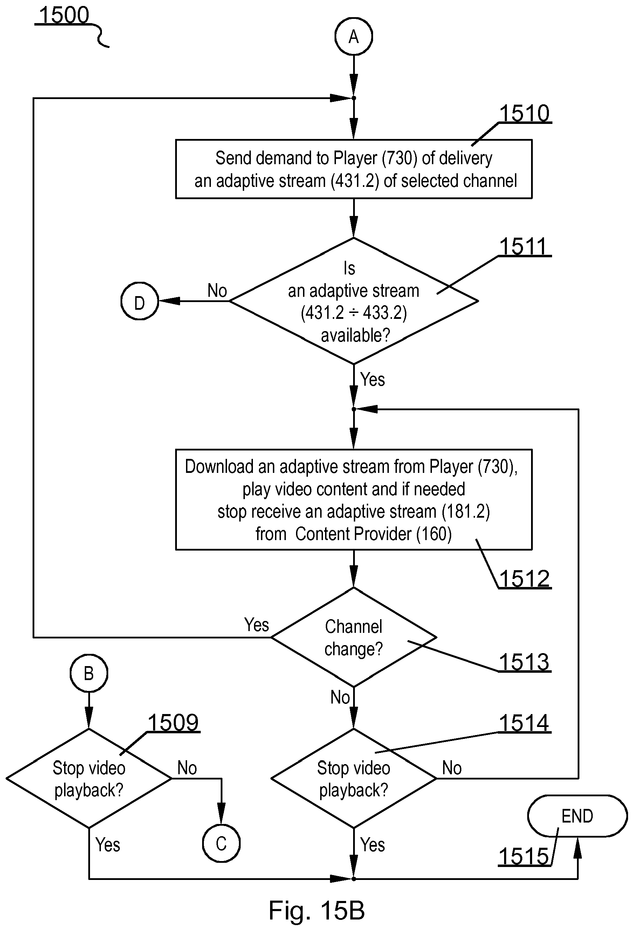

The processor 810 operates utilizing RAM 850 and Flash 860 memory blocks. The client application 812 allows the device to receive video content from the stationary devices 421-423 of the customer premise 140 system, and its detailed structure is shown in Figs. 15A and 15B.

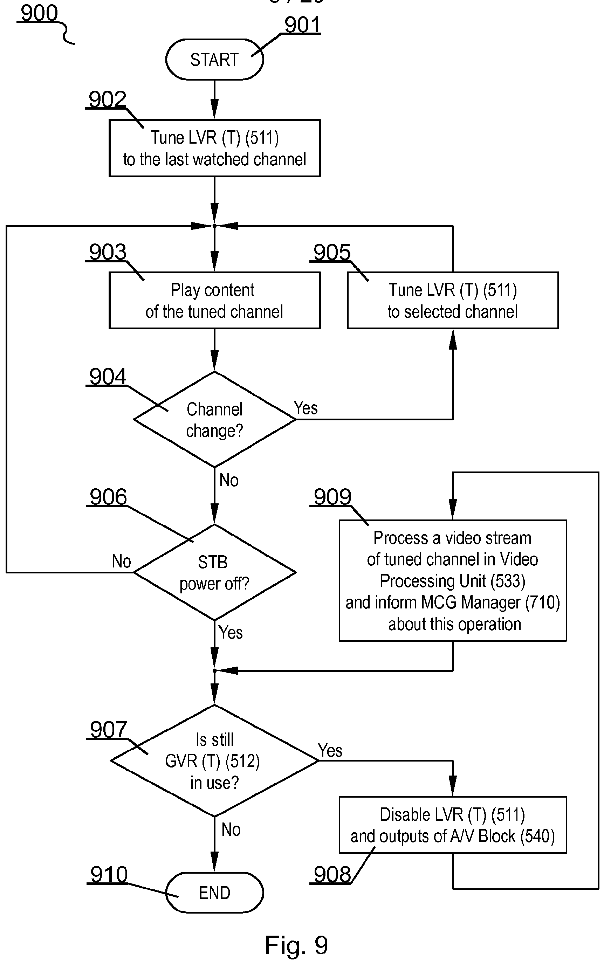

Fig. 9 shows a schematic diagram of one of processes operable at the stationary device 421, indicating the operation of the device 421 when content is watched at a selected channel (in a manner typical to standard STB or SBB operation), its change and operations necessary to be performed while switching off (the operations particularly specific for the present invention include steps 907-909).

When the device 421 is switched on in step 901, the LVR unit 511 is tuned to the last watched channel in step 902. Next, the content of the tuned channel is played in step 903 until a channel change command is received in step 904 or a power-off command is received in step 906. In case of receiving a channel change request, the LVR unit 511 is tuned to the selected channel in step 905.

In case of receiving a power off command, it is checked in step 907 whether the GVR unit 512 is in use. If not, the device is turned off in step 910. However, if a gateway tuner 512 is in use, the video stream of the tuned channel is sent to the storage 740 and the MCG manager 710 is informed about the intention to power off the currently operating stationary device 421.

Subsequently, the LVR unit 511 and the outputs of the audio/video block 540 are disabled in step 908, such that from the user's perspective the device seems to be turned off, while the GVR unit 512 is still operating.

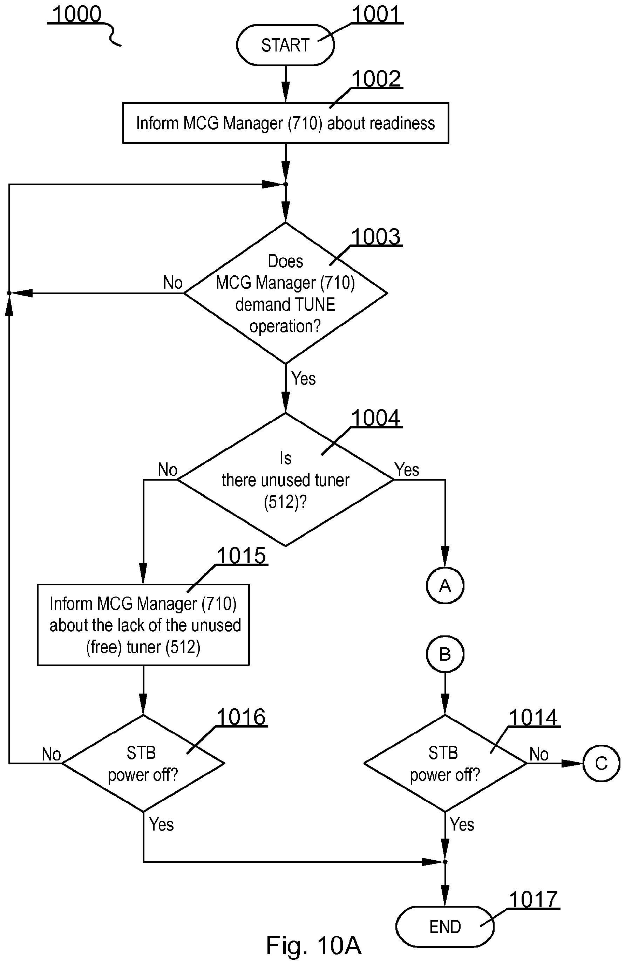

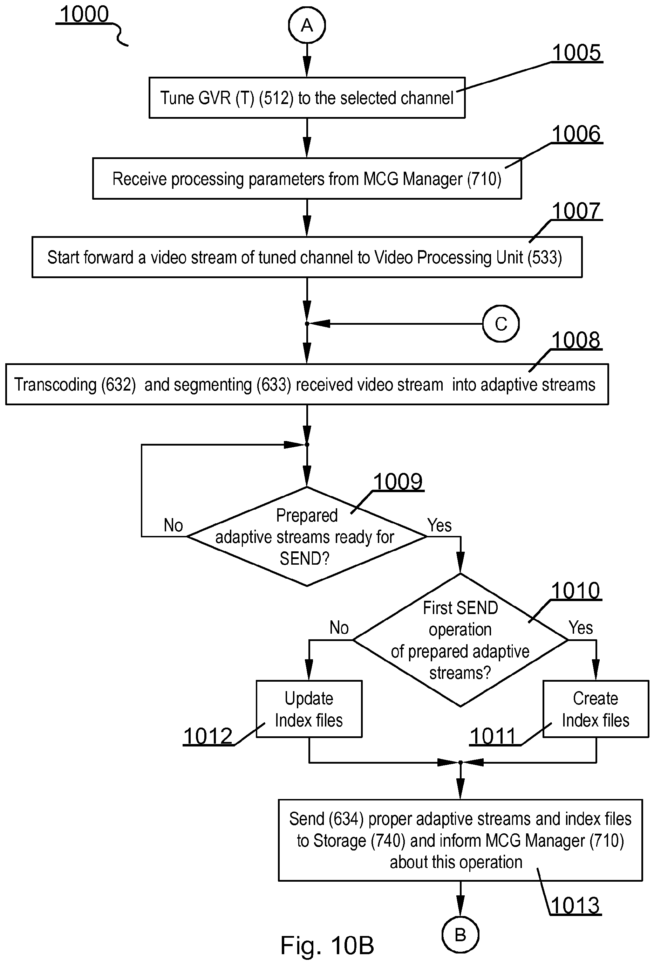

Figs. 10A and 10B show a schematic diagram of one of the processes operable at the stationary device 421, which plays a role in operation of the system of the present invention. The diagram indicates the operations of the device 421 when it receives a request from the MCG manager 710 to perform the operations of tuning to a selected channel, preparing an appropriate stream (steps 1005-1012) and sending the stream to the storage 740 (step 1013).

Upon initiation in step 1001, the device 421 informs the MCG manager 710 about its readiness to operate in step 1002 and awaits in step 1003 to receive a request from the MCG manager 710 to perform a TUNE operation, i.e. to tune to a specific channel to be transmitted to a mobile device.

Upon receipt of the request, the device 421 checks in step 1004 whether its gateway tuner 512 is available. If not, then the MCG manager 710 is informed about lack of unused (free) tuners in step 1015 and the device continues to operate until the next TUNE request is received in step 1003 or a command to power off the device is received in step 1016. However, in case the gateway tuner 512 is free, then in step 1005 that tuner 512 is tuned to the selected channel and processing parameters are received from the MCG manager 710 in step 1006.

Next, in step 1008, the video stream of the tuned channel is forwarded to the video processing unit 533 in step 1007, wherein it is transcoded in the transcoder 632 and segmented in the stream segmenter 633, such as to process it to adaptive streams.

When the prepared adaptive streams are considered in step 1009 as ready for sending, it is checked in step 1010 whether this is going to be the first SEND operation for the prepared adaptive streams. If so, the index files are created in step 1011 and if not, the index files are updated in step 1012.

Subsequently, in step 1013 the adaptive streams and index files are sent via the distribution module 634 to the storage 740 and the MCG manager 710 is informed about this operation.

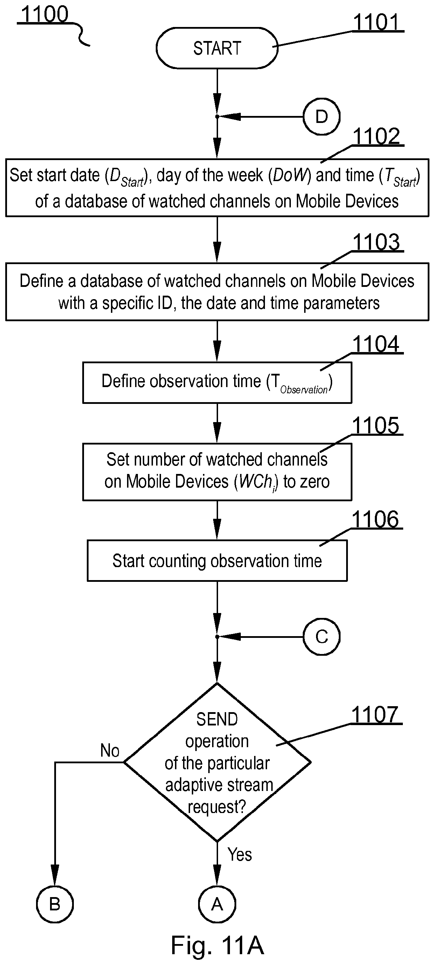

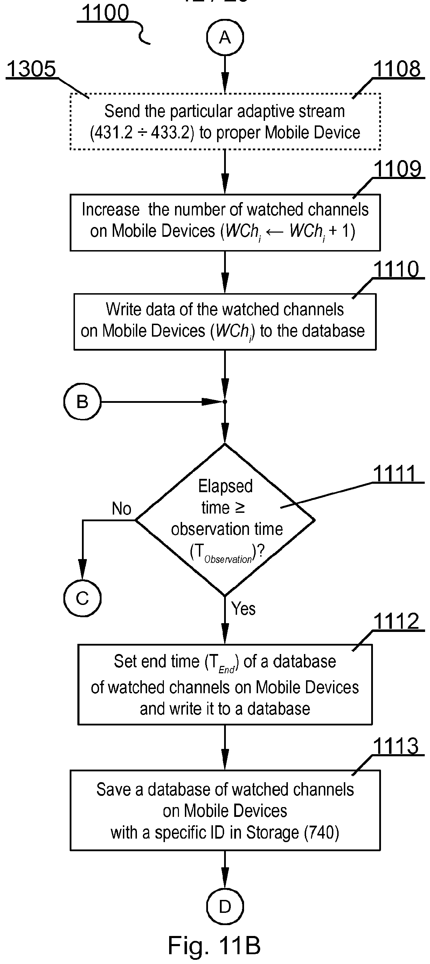

Figs. 11-16 as described below are described to present the other issues related to operation of the system, which may however be realized in alternative ways and do not have an essential impact on the issues related to the distributed processing of video content at the stationary devices.

Figs. 11A and 11B show a schematic diagram of a process executed by the player unit 730, which relates to generating the database (or databases) 731 of channels recently watched on the mobile devices. Each database 731 comprises particular time parameters (such as a day of the week, date, start time, watching time, end time, ID), which are used to define the list 721 of most popular channels, such as to enable efficient dynamic assignment of channels to mobile devices from the temporal point of view.

After initiation in step 1101, in step 1102 there are set: a start date (D_{Start}), day of the week (DoW) and time (T_{Start}) of a database 731 of channels watched on mobile devices 411-413. Next, in step 1103 the database 731 of watched channels is defined with a specific ID, the date and time parameters.

Next, in step 1104 observation time (T_{Observation}) is defined, which is the time for which the mobile devices will be monitored for watching statistics, for example 15 minutes, 1 hour or a few hours. Next, in step 1105 the number of watched channels on mobile devices (WChᵢ) is set to zero and a time counter is started in step 1106.

In step 1107 it is checked whether for a particular adaptive stream a SEND request was receives. If so, the particular adaptive stream 431.2-433.2 is sent to the requesting mobile device 411-413 in step 1108 and the number of watched channels on mobile devices is increased by 1 in step 1109. The data of the watched channels on mobile devices is stored in the database in step 1110.

The procedure continues until the elapsed observation time exceeds the preset observation time T_{Observation} - then, the end time T_{End} of a database of watched channels is set and written to the database 731 in step 1112 and the database entry is saved with a specific ID in the storage 740 in step 1113.

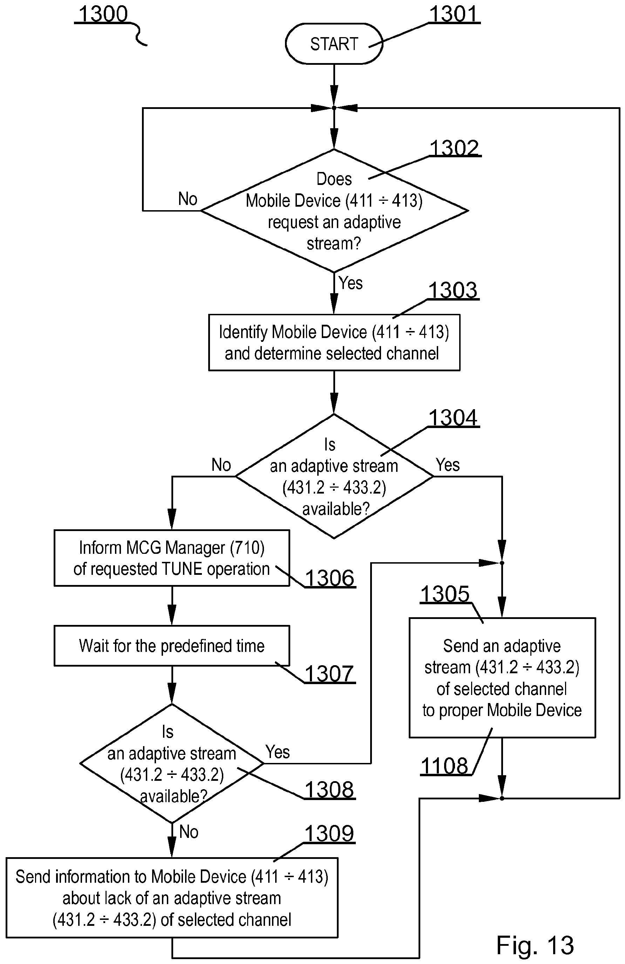

It shall be noted that the step 1108 of transmission of video stream is equivalent to step 1305 of Fig. 13, therefore the step 1108 is marked with a dashed line.

Figs. 12A and 12B show a structure of the database(s) 731 of recently watched channels describing the channels recently viewed by the mobile devices 411-413. A plurality of databases may be created, each being a result of operation of the procedure shown in Figs. 11A and 11B. Each database 731 comprises the following fields:
- ID (1210) of a database;
- Time parameters (1220): Date (D_{Start}), day of the week (DoW), start time (Tstart) and end time (T_{End}) of the particular database;
- Data (1230-1250) of channels (WCh₁-WChₖ), which may include:
   - Number of channel
   - Name of channel

Fig. 13 shows a schematic diagram of a process executed by the player unit 730, which relates to transmitting single-program streams prepared by the VPU 533.

After initiation in step 1301, the procedure waits in step 1302 until one of the mobile devices 411-413 requests an adaptive stream. Then, the mobile device is identified in step 1303 and the requested channel is determined. It is checked in step 1304 whether an adaptive stream 431.2-433.2 is available for that channel. If so, the stream is sent to the requesting mobile device in step 1305 and the procedure continues to monitor further requests in step 1302.

If the requested stream is not available, then in step 1306 the MCG manager 710 is informed about the requested TUNE operation and the procedure waits for a predefined time, such as a few seconds, in step 1307, then it checks again for the availability of the requested adaptive stream in step 1308. In case the stream is still not available, information is sent to the requesting mobile device about lack of the adaptive stream in step 1309 - then the client application may send a request for that stream directly to the content provider 160 (step 1511 of Fig. 15B).

Alternatively, steps 1306-1308 can be iterated a few times and only after that few iterations the final notification about unavailability of the stream can be send to the mobile device in step 1309.

It shall be noted that the step 1305 of transmission of video stream is equivalent to step 1108 of Figs. 11A-11B.

Figs. 14A and 14B show a schematic diagram of a process operated by the channel analyzer 720 for defining the list 721 of most popular channels, based on the database 731 of recently watched channels on mobile devices, such as to select most popular channels based on time parameters related to the current day of week, watching time or others, such as the type of video content (including for example the themes of video movies), information, etc.

After initiation in step 1401, the current day of the week (CDoW) and the current time (T_{Current}) are identified. It is checked whether there are any databases 731 of channels watched on mobile devices which start before and end after the current time. Next it is checked in steps 1404 and 1405 whether there are any databases 731 that are related to the current day of week. If there have not been found any databases, it is checked in step 1406 whether there are any databases 731 at all.

In case databases for the current time and current day of week were found, differences and similarities between these databases 731 are identified in step 1411 and a mix of these databases is determined 1412, wherein the mixing criteria can be set by the system operator. In case only database(s) for the current time were found, the most recent database is determined in step 1410.

In case only database(s) for the current day of the week were found, the most recent database within the same day of week is determined in step 1409. In case the found databases are not related to the current time nor day of week, the most recent database of the available ones is determined in step 1408.

In case there is not available any database, the watched channels in the latest observation time are determined in step 1407. Next, depending on the content of the databases identified, a list 721 of the most popular (mostly watched) channels on mobile devices is prepared in step 1413 and the procedure ends in step 1414.

Figs. 15A and 15B show a schematic diagram of operation of the client application 812 operable at the mobile device 411-413, which indicates the method of reception of single-program video streams (steps 1510-1514) in a case when the MCG unit 414 functions in the customer premises 140 system (step 1505) or in a case when the content is received directly from the content provider 160 (steps 1506-1509).

After initiation in step 1501, the application awaits a video playback request in step 1502. When the user requests video playback, the application requests and receives a channels list 111 from the manager module 110 in step 1503 and then presents the channels list 111 to user and allows selection of particular channel from the list in step 1504.

In step 1505 it is checked whether an MCG unit 414 is present in a given customer premise 140. If not, then a request is sent in step 1506 directly to the content provider 160 to deliver, via the communication channel 181.2, an adaptive stream of the selected channel.

Next, the adaptive stream is downloaded in step 1507 and played at the user's mobile device in step 1507 until a channel change request is received in step 1508 or a video playback stop command is received in step 1509. In turn, when the particular customer premise 140 system has an MCG unit 414, then in step 1510 a request is sent to the player 730 to deliver an adaptive stream 431.2 of the selected channel.

In step 1511 it is checked if the adaptive stream is available over the communication channels 431.2-433.2 (i.e. whether there is any stationary device in the system providing that content) - if not, then a request for that content is sent to the content provider 160 directly in step 1506.

If the adaptive stream is available at the customer premises 140 system, then in step 1512 the adaptive stream is downloaded from the player 730 and the content is played to the user. In case the content was retrieved earlier from the content provider directly, this transmission is terminated in step 1512. The playback is continued until a channel change request is received in step 1513 or a video playback stop request is received in step 1514. Then the procedure ends in step 1515.

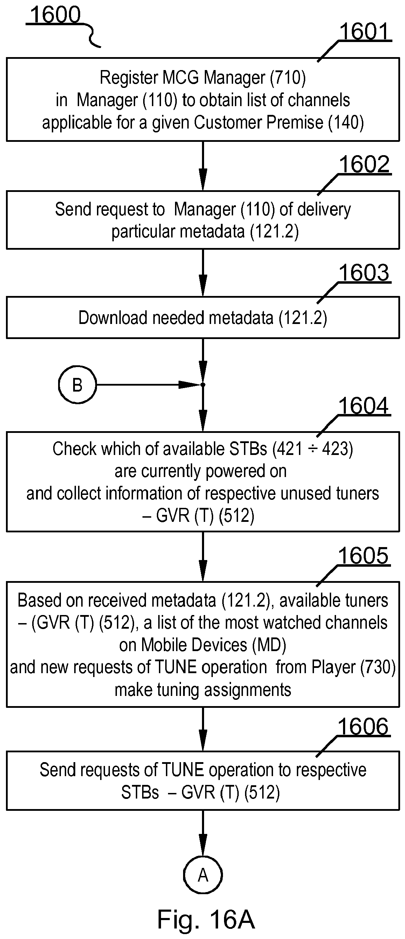

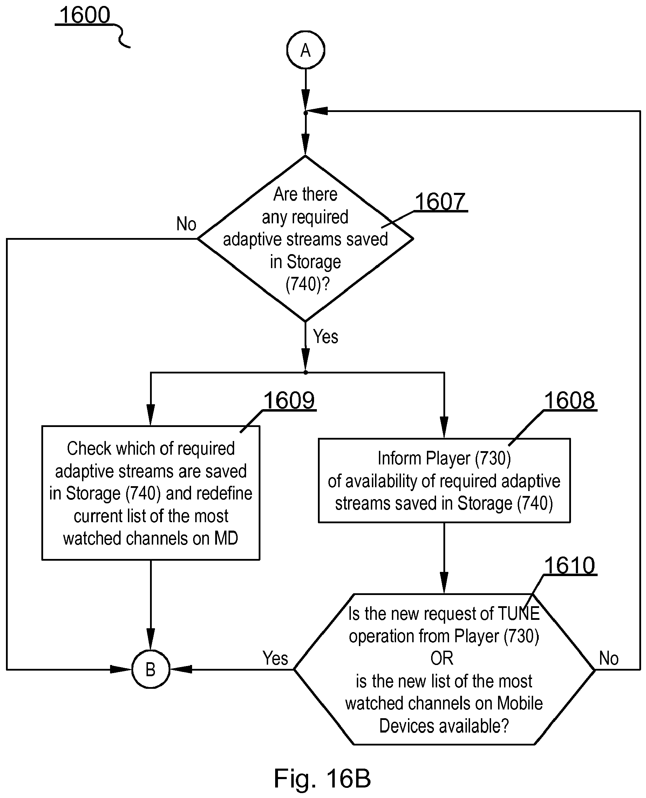

Figs. 16A and 16B show a schematic diagram of operation of a process executed by the MCG manager 710 to provide dynamic assignment of channels in the stationary devices 421-423 of the customer premise 140 system and to transmit video content to the mobile devices 411-413 from the local resources 420 to limit the traffic on the network and increase the throughput of the content delivery network 130. First, the channels from the list 721 of the most popular channel are handled (step 1413) and then other channels, depending on the availability of gateway tuner 512 at stationary devices.

In step 1601 the MCG manager 710 is registered in the manager module 110 to obtain a list 111 of content applicable for a given customer premise 140 system. Next, a request is sent in step 1602 to the manager module 110 to deliver particular metadata over communication channel 121.2, which is then downloaded in step 1603.

In step 1604 it is checked which of the available devices 421-423 are currently powered on and information about their free gateway tuners 512 is collected. In step 1605, based on the received metadata and available tuners and the list 721 of most popular channels on mobile devices, as well as new requests of TUNE operation from the player unit 730, tuning assignments are made.

The requests to tune to a particular channel are sent to respective devices 421-423 in step 1606. In step 1607 it is checked whether any of the required video streams are already stored in the storage 740 and if so, they are processed in the video processing unit 533 in step 1608. In step 1609 it is checked which of the required video streams are stored in the storage 740 and the list 721 of most watched channels on mobile devices is redefined.

In step 1610 it is checked whether there appeared a new TUNE request from the player unit 730 or is there available a new list 721 of the most watched channels on mobile devices and if so, the procedure returns to step 1604.

The implementation of the invention is effected by the particular computer systems and computer-executed methods. Thus the machine or transformation test is therefore fulfilled and the idea is not abstract.

It can be easily recognized, by one skilled in the art, that the aforementioned method for distributed processing of video content may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for distributing video content to at least one mobile device (411-413) at a customer premise (140) system comprising a plurality of stationary devices (421-423) capable of receiving the video content from at least one content provider (160), the method being **characterized in that** it comprises the steps of:
- generating, at the mobile content gateway (414), at least one database (731) of channels recently watched on the mobile devices (411-413) comprising entries related to at least one of a particular: Date (D_{Start}), day of the week (DoW), start time (T_{Start}) and end time (T_{End});
- generating, at the mobile content gateway (414) a list (721) of most popular channels by selecting entries of at least one database (731) of channels recently watched on the mobile devices (411-413);
- sending, from a mobile content gateway (414), to the at least one stationary device (421-423), requests to tune to a channel selected from the list (721) of most popular channels;
- receiving, at the stationary devices (421-423), requests to tune a tuner (512) of the stationary device (421-423) to a requested channel received from the content provider (160);
- preparing, at the stationary devices (421-423), at least one single-program stream from the content received by the tuner (512) of that device and sending the single-program stream to the mobile content gateway (414);
- outputting, from the mobile content gateway (414), the at least one single-program stream as at least one adaptive stream; and
- providing the at least one adaptive stream to the at least one mobile device (411-413) over a wireless data transmission interface.

2. The method according to claim 1, comprising preparing, at the stationary devices (421-423), a plurality of single-program streams from the content received by the tuner (512), each single-program streams having different technical parameters, and sending the single-program streams to the mobile content gateway (414).

3. The method according to any of previous claims, further comprising sending, from the mobile content gateway (414), to the at least one stationary device (421-423) a request to tune to a channel requested by the at least one mobile device and not being comprised in the list (721) of most popular channels.

4. The method according to any of previous claims, further comprising, after receiving at the stationary device (421-423) a power-off command while a tuner (512, 513) tuned to a channel requested by the mobile content gateway (414) is still active, disabling a local tuner (511) and outputs of an A/V block (540) of the stationary device (421-423) while continuing to operate the tuner (512, 513) tuned to a channel requested by the mobile content gateway (414).

5. The method according to any of previous claims, further comprising, at the mobile device (411-413), receiving a content list (111) from a manager module (110) and allowing the user to select a channel from the content list (111).

6. The method according to claim 5, further comprising checking, at the mobile device (411-413), checking whether an adaptive stream for the selected channel is available from the mobile content gateway (414) and if not, sending a request for an adaptive for the selected channel to the content provider (160).

7. The method according to any of previous claims, comprising creating the list (721) of most popular channels by selecting entries of the database (731) of channels recently watched on the mobile devices (411-413) on the basis of the following criteria:
- selecting the databases (731) comprising entries related to the current day of the week (DoW) and the current time (T_{Current});
- in case no databases are available in the previous step, selecting databases (731) comprising entries related to the current time (T_{Current});
- in case no databases are available in the previous step, selecting databases (731) comprising entries related to the current day of the week (DoW); and
- in case no databases are available in the previous step, selecting databases (731) comprising entries related to the most recent time.

8. A computer program comprising program code means for performing all the steps of the method according to any of claims 1-7 when said program is run on a computer.

9. A computer readable medium storing computer-executable instructions performing all the steps of the method according to any of claims 1-7 when executed on a computer.

10. A system for distributing video channels to at least one mobile device (411-413) at a customer premise (140) system comprising a plurality of stationary devices (421-423) capable of receiving the video channels from at least one content provider (160), the system **characterized in that** it comprises:
- a plurality of tuner control units (532) at the stationary devices (421-423), configured to receive requests to tune a tuner (512) of the stationary device (421-423) to a requested channel received from the content provider (160);
- a plurality of video processing units (533) at the stationary devices (421-423), configured to prepare at least one single-program stream from the content received by the tuner (512) of that stationary device (421-423) and to send the stream to a mobile content gateway (414) at the customer premises (140) system;
- wherein the mobile content gateway (414) comprises:
- a player unit (730) comprising at least one database (731) of channels recently watched on the mobile devices (411-413) comprising entries related to at least one of a particular: Date (D_{Start}), day of the week (DoW), start time (T_{Start}) and end time (T_{End}) and configured to output the at least one single-program stream received from the at least one video processing unit (533) of the at least one stationary device (421-423) as at least one adaptive stream;
- a channel analyzer (720) comprising a list (721) of most popular channels comprising entries of at least one database (731) of channels recently watched on the mobile devices (411-413);
- a mobile content gateway manager (710) configured to send to the tuner control unit (532) of the at least one stationary device (421-423) requests to tune to a channel selected from the list (721) of most popular channels;
- and wherein the system further comprises a wireless access point (416) configured to provide the at least one adaptive stream to the at least one mobile device (411-413) over a wireless data transmission interface.

11. The system according to claim 10, wherein the mobile content gateway (414) further comprises a storage (740) configured to store the single-program streams to be transmitted to the at least one mobile device (411-413).

12. The system according to any of claims 10-11, wherein the video processing unit (533) at the stationary devices (421-423) comprises:
- a transcoder (632) configured to receive a video stream (610) from a data receiving block (510) and to transcode it to a transport stream;
- a stream segmenter (633) configured to read the transport stream from the transcoder (632) and divide it into a series of segments, as well as to create an index file comprising references to the segments; and
- a distribution unit (634) configured to transmit (620) the segments and the index file to the mobile content gateway (414) as a single-program stream.
